# EUROPEAN PATENT SPECIFICATION

(11) **EP 3 441 429 B1**
(45) Date of publication and mention of the grant of the patent: **26.05.2021**
(21) Application number: 17185971.3
(22) Date of filing: 11.08.2017
(51) Int. Cl.: C09B 7/02, C09B 9/04, C09B 67/44, C09B 67/54, D06P 1/642, D06P 1/22, D06P 1/673

(54) **PURIFIED CONCENTRATED AQUEOUS LEUCOINDIGO SALT SOLUTIONS**
GEREINIGTE KONZENTRIERTE WÄSSRIGE LEUKOINDIGOSALZ-LÖSUNGEN
SOLUTIONS AQUEUSES CONCENTRÉES ET PURIFIÉES DE SEL DE LEUCOINDIGO

(43) Date of publication of application: 13.02.2019
(73) Proprietor: Archroma IP GmbH, 4153 Reinach (CH)
(72) Inventor: LUCIC, Erwin, Singapore 609917, Singapore (SG); HÜBNER, Jörg, 69115 Heidelberg, (DE)
(74) Representative: Ricker, Mathias

(56) References cited:
- WO-A2-2004/024826
- US-A- 5 424 453
- US-B1- 6 428 581

## Description

### FIELD OF THE INVENTION

The invention is in the field of stable and purified concentrated aqueous leucoindigo salt solutions and indigo obtained therefrom.

### BACKGROUND OF THE INVENTION

Indigo is a vat dye used for dyeing cellulose-containing textile materials.

For application on a textile material, indigo is subjected to reduction wherein a water-soluble leucoindigo salt is formed. This salt is then applied in aqueous solution to the textile material. Oxidation of the leucoindigo salt results in the formation of indigo, wherein the dyed textile material is obtained.

Synthetically produced indigo contains impurities entrapped therein based on aromatic amines due to the commonly used production processes, in particular aniline and/or N-methylaniline. For example, synthetically produced indigo may contain up to 6,000 ppm aniline and up to 4,000 ppm N-methylaniline. Aromatic amines such as aniline and N-methylaniline are not desired in textile applications. Thus, these impurities should be removed as far as possible from indigo, respectively the leucoindigo salt made therefrom, prior to the application on the textile material.

WO 2004/024826 suggests removing aromatic amine impurities on the stage of the aqueous leucoindigo salt solution by distillation, steam distillation, extraction or by stripping with an inert gas. This prior art discloses that the concentration of aromatic amines may be reduced below an amount of 200 ppm. The purified leucoindigo salt solution may then be subjected to oxidation in order to obtain indigo containing said low amounts of aromatic amines, if any, wherein the leucoindigo is present on a textile material prior to the oxidation.

Furthermore, for transportation and application, an aqueous leucoindigo salt solution should be as stable as possible in order to prevent undesired crystallization and/or precipitation of the salt. This is in particular important if the leucoindigo salt is present in the aqueous medium in a relative high concentration. Concentrated leucoindigo salt solutions are advantageous in the vat dying process due to a reduced wastewater contamination.

WO 00/04100 suggests providing an aqueous leucoindigo solution in the form of a mixed sodium and potassium salt, wherein the mol-% of sodium is in the range of from 70 to 30, and the mol-% of potassium is correspondingly in the range of from 30 to 70. This corresponds to a molar ratio of sodium to potassium in the range of from 2.33 : 1 to 1 : 2.33. Within said range, despite a relative high concentration of the leucoindigo salt of from 25 to 40 % by weight, said dissolved leucoindigo salt solution is stable at room temperature, or is stable at an increased temperature in the range of from 40 to 60 °C in case of a concentration between 50 and 55 % by weight, i.e. the salt is not prone to crystallization or precipitation. This prior art further discloses a molar ratio of sodium to potassium in the range of from 3 : 1 to 1 : 3, which corresponds to a mol-% range of sodium of from 75 to 25, and potassium of from 25 to 75.

WO 00/04100 further teaches with reference to WO 94/23114 that a solution of leucoindigo in the form of a sodium salt is stable up to a concentration of 20 % by weight only. This means nothing else than that the replacement of potassium by sodium in the leucoindigo salts defined in WO 00/04100 negatively affects stability of a respective solution and promotes crystallization.

### OBJECTS OF THE INVENTION

There is an ongoing need in the industry for providing further stable and purified concentrated leucoindigo salt solutions and indigo made therefrom.

### SUMMARY OF THE INVENTION

Despite the teaching of the addressed prior art, i.e. that concentrated leucoindigo salt solutions may be provided in a molar range of sodium to potassium in the range of from 2.33 : 1 to 1 : 2.33, and that sodium negatively affects the stability of leucoindigo solutions, the inventors of the present invention have investigated leucoindigo salt solutions having an increased molar ratio of sodium to potassium. The inventors of the present invention have surprisingly discovered that further stable and concentrated leucoindigo salt solutions may be prepared which meet industrial requirements by increasing the molar ratio of sodium to potassium known from the prior art in the range of from 3 : 1 to 1 : 3 to a molar ratio of from 4 : 1 to 8 : 1. Solutions may be obtained having a leucoindigo salt concentration of from 25 to 45 % by weight such as 30 % by weight, based on the total weight of the solution, which are stable at room temperature or at elevated temperature up to 60 °C. This resulting concentration range is sufficient to achieve the desired middle and deep shades in the vat dyeing process. Also the requirements of a reduced wastewater contamination in the dyeing factories may be met.

The crude leucoindigo salt solutions may be subjected to a purification step such as distillation in order to remove undesired excess aromatic amines, wherein purified and stable concentrated leucoindigo salt solutions may be obtained.

The invention relates to the following items:
1. Method of making an aqueous leucoindigo salt solution, the method comprising step (A):
   (A) subjecting an aqueous composition comprising indigo which contains an aromatic amine in the form of aniline or aniline and N-methylaniline, to reduction, preferably hydrogenation, in the presence of sodium hydroxide and potassium hydroxide in order to generate an aqueous leucoindigo solution comprising said aromatic amine, wherein said leucoindigo is in the form of a mixed sodium and potassium salt, wherein the molar ratio of sodium to potassium is in the range of from 4 : 1 to 8 : 1.
2. Method of purifying an aqueous leucoindigo solution comprising an aromatic amine in the form of aniline or aniline and N-methylaniline, wherein said leucoindigo is in the form of a mixed sodium and potassium salt, wherein the molar ratio of sodium to potassium is in the range of from 4 : 1 to 8 : 1, the method comprising step (B):
   (B) subjecting the aqueous leucoindigo solution comprising said aromatic amine to a purification step selected from the group consisting of
   (a) distillation
   (b) steam distillation
   (c) extraction
   (d) stripping with an inert gas
   (e) or to a combination of two or more thereof.
3. Method of item 2, comprising step (A) prior to step (B):
   (A) subjecting an aqueous composition comprising indigo which contains an aromatic amine in the form of aniline or aniline and N-methylaniline, to reduction, preferably hydrogenation, in the presence of sodium hydroxide and potassium hydroxide in order to generate an aqueous leucoindigo solution comprising said aromatic amine, wherein said leucoindigo is in the form of a mixed sodium and potassium salt, wherein the molar ratio of sodium hydroxide to potassium hydroxide is in the range of from 4 : 1 to 8 : 1.
4. Method of any one of the preceding items, wherein the molar ratio of sodium to potassium is in the range of from 5 : 1 to 7 : 1.
5. Method of any one of the preceding items, wherein the concentration of said aromatic amine in the solution prior to purification is above 200 ppm determined according to ISO 14362-1:2017(E), such as 2,000 to 10,000 ppm.
6. Method of item 2 or any one of items 3 to 5 as far as depending on item 2, wherein the distillation performed in step (B) is selected from the group consisting of: distillation at normal pressure, distillation under vacuum and steam distillation, or a combination of two or three thereof.
7. Method of item 2 or any one of items 3 to 6 as far as depending on item 2, wherein step (B) is performed as long as or as often as required until after purification the concentration of the aromatic amine in the solution is below 200 ppm determined according to ISO 14362-1:2017(E).
8. Method of item 2 or any one of items 3 to 7 as far as depending on item 2, wherein the concentration of the leucoindigo salt in the solution after purification is set to a range of from 5 to 65 % by weight such as 10 to 60 % by weight or 15 to 55 by weight or 20 to 50 % by weight or 25 to 45 % by weight, based on the total weight of the solution.
9. Aqueous leucoindigo salt solution comprising an aromatic amine in the form of aniline or aniline and N-methylaniline, wherein the concentration of said aromatic amine is above 200 ppm determined according to ISO 14362-1:2017(E), such as 2,000 to 10,000 ppm, wherein the leucoindigo is in the form of a mixed sodium and potassium salt, and wherein the molar ratio of sodium to potassium is in the range of from 4 : 1 to 8 : 1 .
10. Aqueous leucoindigo salt solution of item 9, wherein the concentration of the salt in the solution is in the range of from 5 to 65 % by weight such as from 10 to 60 % by weight or 15 to 55 % by weight or 20 to 50 % by weight or 25 to 45 % by weight, based on the total weight of the solution.
11. Aqueous leucoindigo solution comprising an aromatic amine in the form of aniline or aniline and N-methylaniline, wherein the concentration of the aromatic amine is below 200 ppm determined according to ISO 14362-1:2017(E), wherein said leucoindigo is in the form of a mixed sodium and potassium salt, and wherein the molar ratio of sodium to potassium is in the range of from 4 : 1 to 8 : 1.
12. Aqueous leucoindigo solution of item 11, wherein the concentration of the salt is in the range of from 5 to 65 % by weight such as from 10 to 60 % by weight or 15 to 55 % by weight or 20 to 50 % by weight or 25 to 45 % by weight, based on the total weight of the solution.
13. Method of making indigo, comprising step (D):
   (D) oxidizing the aqueous leucoindigo solution as defined in any one of items 11 to 12.
14. Method of item 13, comprising step (C) prior to step (D):
   (C) treating a textile with the leucoindigo solution as defined in any one of items 11 to 12.

### DETAILED DESCRIPTION OF THE INVENTION

According to a ***first aspect,*** the invention relates to a method of making an aqueous leucoindigo salt solution from indigo containing an aromatic amine, in particular aniline or aniline and N-methylaniline. For this, indigo is subjected to reduction by using an appropriate reduction agent in the presence of appropriate amounts of sodium hydroxide and potassium hydroxide.

Accordingly, the method comprises step (A):
(A) subjecting an aqueous composition comprising indigo which contains an aromatic amine in the form of aniline or aniline and N-methylaniline, to reduction in the presence of sodium hydroxide and potassium hydroxide in order to generate an aqueous leucoindigo solution comprising said aromatic amine, wherein said leucoindigo is in the form of a mixed sodium and potassium salt, wherein the molar ratio of sodium hydroxide to potassium hydroxide is in the range of from 4 : 1 to 8 : 1.

Preferably, reduction is performed as hydrogenation. Hydrogenation may be performed by methods known in the art.

A preferred reduction method is hydrogenation using Raney-Nickel as catalyst.

According to the invention, the molar ratio of sodium hydroxide to potassium hydroxide is in the range of from 4 : 1 to 8 : 1.

In a preferred embodiment, the molar ratio is from 5 : 1 to 7 : 1.

The above ratios are also found in the leucoindigo salt purified according to the method of the invention as defined in the ***second aspect*** below, and using the leucoindigo salt produced according to the ***first aspect.***

The amount of sodium hydroxide and potassium hydroxide used in step (A) essentially corresponds to an amount which stoichiometrically corresponds to the amount which is necessary for the complete formation of the leucoindigo salt. Preferably, 1.5 to 2.5 mole alkalis are used per mole leucoindigo. More preferably, 2.0 to 2.5 mole alkalis are used, still more preferred 2.1 to 2.5 mole alkalis.

It is possible to provide the required amount of alkali at once prior to the hydrogenation or in portions during the hydrogenation, or prior and during the hydrogenation. If necessary, additional alkali may also be added after the hydrogenation.

Subsequently to the preparation of the crude aqueous leucoindigo salt solution, same may be purified by a suitable purification method. The methods known from the prior art mentioned in the Background section may be used, i.e. (a) distillation, (b) steam distillation, (c) extraction, (d) stripping with an inert gas or (e) a combination of two or more thereof. This means that said aromatic amine in the form of aniline or aniline and N-methylaniline may be removed in order to generate a purified aqueous leucoindigo salt solution.

Accordingly, in a ***second aspect,*** the invention relates to a method of purifying an aqueous leucoindigo salt solution comprising an aromatic amine in the form of aniline or aniline and N-methylaniline, wherein said leucoindigo is in the form of a mixed sodium and potassium salt, wherein the molar ratio of sodium to potassium is in the range of from 4 : 1 to 8 : 1, the method comprising step (B):
(B) subjecting said aqueous leucoindigo salt solution comprising said aromatic amine to a purification step selected from the group consisting of
(a) distillation,
(b) steam distillation,
(c) extraction,
(d) stripping with an inert gas,
(e) or to a combination of two or more thereof.

Purification according to step (B) is performed in the absence of oxygen in order to avoid an untimely oxidation of the leucoindico salt to indigo.

In one embodiment, the method requires that prior to step (B) an aqueous leucoindigo solution comprising an aromatic amine in the form of aniline or aniline and N-methylaniline is provided. Moreover, said leucoindigo salt has to be provided in the form of a mixed sodium and potassium salt, wherein the molar ratio of sodium to potassium is in the range from 4 : 1 to 8 : 1.

Preferred is a ratio of from 5 : 1 to 7 : 1.

As used herein, the terms *"sodium"* and *"potassium"* refer to the cations thereof.

Said aqueous leucoindigo salt solution used in step (B) may be produced according to the method defined in the ***first aspect.***

Accordingly, the method may further comprise step (A) prior to step (B):
(A) subjecting an aqueous composition comprising indigo which contains an aromatic amine in the form of aniline or aniline and N-methylaniline, to reduction, preferably hydrogenation, in the presence of sodium hydroxide and potassium hydroxide, in order to generate an aqueous leucoindigo solution comprising said aromatic amine, wherein said leucoindigo is in the form of a mixed sodium and potassium salt, wherein the molar ratio of sodium hydroxide to potassium hydroxide is in the range of from 4 : 1 to 8 : 1.

In one embodiment of the ***first aspect*** and the ***second aspect,*** the concentration of the aromatic amine in the crude aqueous leucoindigo salt solution obtained in step (A) or used in step (B) prior to purification is above 200 ppm, based on the total weight of the solution.

In another embodiment, the concentration of said aromatic amine is above 500 ppm or 1,000 ppm or 1,500 ppm or 2,000 ppm or 2,500 ppm or 3,000 ppm or 3,500 ppm or 4,000 ppm. In one embodiment, the concentration prior to distillation is from 2,000 to 10,000 ppm.

In one embodiment, the concentration of aniline in the solution is in the range of from 2,000 ppm to 2,500 ppm, and the concentration of N-methyl aniline is in the range of from 1,000 ppm and 1,500 ppm.

In one embodiment, step (B) is performed as long as or as often as required until the concentration of the aromatic amine after purification is below 200 ppm, or below 100 ppm or below 50 ppm or below 20 ppm or below 10 ppm or below 5 ppm as determined according to ISO 14362-1:2017(E).

The term *"below 100 ppm or below 100 ppm* or below 50 ppm *or below 20 ppm or below 10 ppm or below 5 ppm"* encompasses as lower limit at which the aromatic amine is no longer detectable, i.e. 0 ppm measured according to ISO 14362-1:2017(E).

In one embodiment, step (B) is performed as long as or as often as required until the concentration of aniline is below 200 ppm.

In one embodiment, step (B) is performed as long as or as often as required until the concentration of N-methylaniline is below 20 ppm.

In one embodiment, step (B) is performed as long as or as often as required until the concentration of aniline is below 200 ppm, and the concentration of N-methylaniline is below 20 ppm, wherein the total weight of the amines does not exceed 200 ppm.

In a preferred embodiment, step (B) is performed as long as or as often as required until the concentration of aniline is below 40 ppm, and the concentration of N-methylaniline is below 5 ppm.

In a further preferred embodiment, step (B) is performed as long as or as often as required until the concentration of aniline is below 20 ppm, and the concentration of N-methylaniline is no longer detectable.

In still another preferred embodiment, step (B) is performed as long as or as often as required until the concentration of aniline is below 10 ppm, and the concentration of N-methylaniline is no longer detectable.

In a preferred embodiment, purification is performed by distillation.

Distillation may also be performed in the presence of a flow of an inert gas such as nitrogen. Thus, the solution is simultaneously distilled and stripped.

During distillation, said aromatic amine is removed together with water as an azeotropic mixture.

In a preferred embodiment, the distillation is performed at normal pressure.

In another embodiment, the distillation is performed under vacuum.

In one embodiment, prior to purification performed in step (B), the concentration of indigo containing an aromatic amine in the aqueous composition used in step (A) is selected such that said leucoindigo salt is obtained in step (A) in a concentration below 25 % by weight.

Accordingly, in one embodiment, the concentration of the leucoindigo salt used in step (B) is also below 25 % by weight.

A concentration below 25 % by weight may be beneficial since if purification by distillation is selected, during distillation, water and said aromatic amine are distilled off, thus the leucoindigo salt solution is purified and at the same time the solution is concentrated wherein a stable and purified concentrated leucoindigo salt solution may be obtained.

In another embodiment, distillation is performed as steam distillation.

Since aromatic amines such as aniline and N-methylaniline are steam volatile due to the formation of an azeotropic mixture, said aromatic amine is removed in step (B) from the crude leucoindigo salt solution obtained in step (A) together with water.

Due to the steam distillation, the leucoindigo solution is commonly diluted by condensing steam, wherein a further diluted solution is obtained. Subsequently, excess water may be distilled off in order to concentrate the solution, wherein further aromatic amine may be removed.

In a preferred embodiment, the concentration of the leucoindigo salt solution obtained in step (B) is set to a range of from 15 to 45 % by weight, preferably 25 to 45 % by weight, based on the total weight of the solution, further preferred of from 25 to 35 % by weight.

In one embodiment, this setting can be done either by adding or removing water, if necessary, e.g. by adding water to a solution which has been concentrated by distillation to a range above 45 % by weight, or by distillation of a solution which has been diluted due to steam distillation below a concentration of 25 % by weight.

In one embodiment, step (B) is performed such that the concentration of leucoindigo in the form of a mixed sodium and potassium salt in the solution after purification is above 15 %, based on the total weight of the solution, preferably from 25 to 45 % by weight, further preferred from 25 to 35 % by weight.

In another embodiment, step (B) is performed such that the concentration of the aromatic amine after purification is below 200 ppm such as below 100 ppm or below 50 ppm or below 20 ppm or below 10 ppm or below 5 ppm, based on the total weight of the solution, and the concentration of leucoindigo in the form of a mixed sodium and potassium salt in the solution is above 25 %, based on the total weight of the solution, preferably of from 25 to 45 % by weight, further preferred from 25 to 35 % by weight.

According to a ***third aspect,*** the invention relates to an aqueous leucoindigo salt solution comprising an aromatic amine in the form of aniline or aniline and N-methylaniline, wherein the concentration of the aromatic amine in the solution is above 200 ppm, wherein the leucoindigo salt in the solution is in the form of a mixed sodium and potassium salt, and wherein the molar ratio of sodium to potassium is in the range of from 4 : 1 to 8 : 1.

In one embodiment, the concentration of the salt in the non-purified solution is ≤ 35 % by weight, based on the total weight of the solution, preferably of from 25 to 35 % by weight.

In another embodiment, the concentration of the salt in the non-purified solution is ≤ 25 % by weight, based on the total weight of the solution, preferably of from 15 to 25 % by weight.

According to a ***fourth aspect,*** the invention relates to an aqueous leucoindigo salt solution comprising an aromatic amine in the form of aniline or aniline and N-methylaniline, wherein the concentration of the aromatic amine in the solution is below 200 ppm such as below 100 ppm or below 50 ppm or below 20 ppm or below 10 ppm or below 5 ppm, and wherein the leucoindigo in the solution is in the form of a mixed sodium and potassium salt, wherein the molar ratio of sodium to potassium is in the range of from 4 : 1 to 8 : 1.

In a preferred embodiment, the concentration of the salt in the purified solution is from 5 to 65 % by weight such as 10 to 60 % by weight or 15 to 55 % by weight or 20 to 50 % by weight or 25 to 45 % by weight, based on the total weight of the solution, further preferred from 25 to 35 % by weight.

The solution defined in the ***fourth aspect*** may be used for preparing indigo.

Thus, according to a ***fifth aspect,*** the invention relates to a method of making indigo, comprising step (D):
(D) oxidizing the aqueous leucoindigo solution as defined in the ***fourth aspect***

The oxidation methods known from the respective prior art may be used for oxidation.

In a preferred embodiment, said oxidation is performed in the presence of a textile which has been treated with said leucoindigo salt solution obtained in the method as defined in the ***fourth aspect.***

Accordingly, the invention also relates to a method of making indigo, wherein step (D) comprises step (C) prior to step (D):
(C) treating a textile with the leucoindigo solution as defined in the ***fourth aspect.***

### EXAMPLES

### Example 1

1311 g of an aqueous indigo suspension containing 262 g indigo (concentration 20 % by weight) were hydrogenated in the presence of 78 g sodium hydroxide and 19 g potassium hydroxide and 6 g Raney-Nickel at 70 °C and 2 bar pressure. After finalizing the reaction, the reaction mixture was cooled down and the pressure was released. An aqueous alkaline solution of leucoindigo in a concentration of 20 % by weight based on the total weight of the solution was obtained. The aniline content measured according to ISO 14362-1:2017(E) was 2,585 ppm and the N-methylaniline content 1,276 ppm.

### Example 2

1000 g of the solution obtained in Example 1 were subjected to distillation at normal pressure. After 540 g water had been distilled off, a 31 % by weight solution was obtained. The solution was stable at 23 °C. The aniline content measured according to ISO 14362-1:2017(E) was 195 ppm and the N-methylaniline content 3.3 ppm.

## Claims

1. Method of making an aqueous leucoindigo salt solution, the method comprising step (A):
(A) subjecting an aqueous composition comprising indigo which contains an aromatic amine in the form of aniline or aniline and N-methylaniline, to reduction, preferably hydrogenation, in the presence of sodium hydroxide and potassium hydroxide in order to generate an aqueous leucoindigo solution comprising said aromatic amine, wherein said leucoindigo is in the form of a mixed sodium and potassium salt, wherein the molar ratio of sodium to potassium is in the range of from 4 : 1 to 8 : 1.

2. Method of purifying an aqueous leucoindigo solution comprising an aromatic amine in the form of aniline or N-methylaniline or aniline and N-methylaniline, wherein said leucoindigo is in the form of a mixed sodium and potassium salt, wherein the molar ratio of sodium to potassium is in the range of from 4 : 1 to 8 : 1, the method comprising step (B):
(B) subjecting the aqueous leucoindigo solution comprising said aromatic amine to a purification step selected from the group consisting of
(a) distillation
(b) steam distillation
(c) extraction
(d) stripping with an inert gas
(e) or to a combination of two or more thereof.

3. Method of claim 2, comprising step (A) prior to step (B):
(A) subjecting an aqueous composition comprising indigo which contains an aromatic amine in the form of aniline or aniline and N-methylaniline, to reduction, preferably hydrogenation, in the presence of sodium hydroxide and potassium hydroxide in order to generate an aqueous leucoindigo solution comprising said aromatic amine, wherein said leucoindigo is in the form of a mixed sodium and potassium salt, wherein the molar ratio of sodium hydroxide to potassium hydroxide is in the range of from 4 : 1 to 8 : 1.

4. Method of any one of the preceding claims, wherein the molar ratio of sodium to potassium is in the range of from 5 : 1 to 7 : 1.

5. Method of any one of the preceding claims, wherein the concentration of said aromatic amine in the solution prior to purification is above 200 ppm determined according to ISO 14362-1:2017(E).

6. Method of claim 2 or any one of claims 3 to 5 as far as depending on claim 2, wherein the distillation performed in step (B) is selected from the group consisting of: distillation at normal pressure, distillation under vacuum and steam distillation, or a combination of two or three thereof.

7. Method of claim 2 or any one of claims 3 to 6 as far as depending on claim 2, wherein step (B) is performed as long as or as often as required until after purification the concentration of the aromatic amine in the solution is below 200 ppm determined according to ISO 14362-1:2017(E).

8. Method of claim 2 or any one of claims 3 to 7 as far as depending on claim 2, wherein the concentration of the leucoindigo salt in the solution after purification is set to a range of from 5 to 65 % by weight, based on the total weight of the solution.

9. Aqueous leucoindigo salt solution comprising an aromatic amine in the form of aniline or aniline and N-methylaniline, wherein the concentration of aromatic amine is above 200 ppm determined according to ISO 14362-1:2017(E), wherein the leucoindigo is in the form of a mixed sodium and potassium salt, and wherein the molar ratio of sodium to potassium is in the range of from 4 : 1 to 8 : 1.

10. Aqueous leucoindigo salt solution of claim 9, wherein the concentration of the salt in the solution is in the range of from 5 to 65 % by weight, based on the total weight of the solution.

11. Aqueous leucoindigo solution comprising an aromatic amine in the form of aniline or aniline and N-methylaniline, wherein the concentration of the aromatic amine is below 200 ppm determined according to ISO 14362-1:2017(E), wherein said leucoindigo is in the form of a mixed sodium and potassium salt, and wherein the molar ratio of sodium to potassium is in the range of from 4 : 1 to 8 : 1.

12. Aqueous leucoindigo solution of claim 11, wherein the concentration of the salt is in the range of from 5 to 65 % by weight, based on the total weight of the solution.

13. Method of making indigo, comprising step (D):
(D) oxidizing the aqueous leucoindigo solution as defined in any one of claims 11 to 12.

14. Method of claim 13, comprising step (C) prior to step (D):
(C) treating a textile with the leucoindigo solution as defined in any one of claims 11 to 12.

## Patentansprüche

1. Verfahren zur Herstellung einer wässrigen Leukoindigosalz-Lösung, wobei das Verfahren den Schritt (A) aufweist:
(A) Unterziehen einer wässrigen Zusammensetzung, die Indigo aufweist, der ein aromatisches Amin in Form von Anilin oder Anilin und N-Methylanilin enthält, einer Reduktion, vorzugsweise Hydrierung, in Gegenwart von Natriumhydroxid und Kaliumhydroxid, um eine wässrige Leukoindigo-Lösung zu erzeugen, die das aromatische Amin aufweist, wobei der Leukoindigo in Form eines gemischten Natrium- und Kaliumsalzes vorliegt, wobei das molare Verhältnis von Natrium zu Kalium im Bereich von 4:1 bis 8:1 liegt.

2. Verfahren zur Reinigung einer wässrigen Leukoindigo-Lösung, die ein aromatisches Amin in Form von Anilin oder N-Methylanilin oder Anilin und N-Methylanilin enthält, wobei der Leukoindigo in Form eines gemischten Natrium- und Kaliumsalzes vorliegt, wobei das molare Verhältnis von Natrium zu Kalium im Bereich von 4:1 bis 8:1 liegt, wobei das Verfahren Schritt (B) aufweist:
(B) Unterziehen der wässrigen Leukoindigo-Lösung, die das aromatische Amin aufweist, einem Reinigungsschritt, ausgewählt aus der Gruppe bestehend aus
(a) Destillation
(b) Wasserdampfdestillation
(c) Extraktion
(d) Stripping mit einem Inertgas
(e) oder einer Kombination von zwei oder mehreren davon.

3. Verfahren nach Anspruch 2, aufweisend Schritt (A) vor Schritt (B):
(A) Unterziehen einer wässrigen Zusammensetzung, die Indigo aufweist, der ein aromatisches Amin in Form von Anilin oder Anilin und N-Methylanilin enthält, einer Reduktion, vorzugsweise Hydrierung, in Gegenwart von Natriumhydroxid und Kaliumhydroxid, um eine wässrige Leukoindigo-Lösung zu erzeugen, die das aromatische Amin aufweist, wobei der Leukoindigo in Form eines gemischten Natrium- und Kaliumsalzes vorliegt, wobei das molare Verhältnis von Natriumhydroxid zu Kaliumhydroxid im Bereich von 4:1 bis 8:1 liegt.

4. Verfahren nach irgendeinem der vorhergehenden Ansprüche, wobei das molare Verhältnis von Natrium zu Kalium im Bereich von 5:1 bis 7:1 liegt.

5. Verfahren nach irgendeinem der vorhergehenden Ansprüche, wobei die Konzentration des aromatischen Amins in der Lösung vor der Reinigung über 200 ppm liegt, bestimmt nach ISO 14362-1:2017(E).

6. Verfahren nach Anspruch 2 oder irgendeinem der Ansprüche 3 bis 5, soweit von Anspruch 2 abhängig, wobei die in Schritt (B) durchgeführte Destillation ausgewählt ist aus der Gruppe bestehend aus: Destillation bei Normaldruck, Destillation unter Vakuum und Dampfdestillation oder einer Kombination von zwei oder drei davon.

7. Verfahren nach Anspruch 2 oder irgendeinem der Ansprüche 3 bis 6, soweit von Anspruch 2 abhängig, wobei Schritt (B) so lange oder so oft wie erforderlich durchgeführt wird, bis nach der Reinigung die Konzentration des aromatischen Amins in der Lösung unter 200 ppm liegt, bestimmt nach ISO 14362-1:2017(E).

8. Verfahren nach Anspruch 2 oder irgendeinem der Ansprüche 3 bis 7, soweit von Anspruch 2 abhängig, wobei die Konzentration des Leukoindigosalzes in der Lösung nach der Reinigung auf einen Bereich von 5 bis 65 Gew.-%, bezogen auf das Gesamtgewicht der Lösung, eingestellt wird.

9. Wässrige Leukoindigosalz-Lösung, aufweisend ein aromatisches Amin in Form von Anilin oder Anilin und N-Methylanilin, wobei die Konzentration des aromatischen Amins über 200 ppm liegt, bestimmt gemäß ISO 14362-1:2017(E), wobei der Leukoindigo in Form eines gemischten Natrium- und Kaliumsalzes vorliegt, und wobei das Molverhältnis von Natrium zu Kalium im Bereich von 4:1 bis 8:1 liegt.

10. Wässrige Leukoindigosalz-Lösung nach Anspruch 9, wobei die Konzentration des Salzes in der Lösung im Bereich von 5 bis 65 Gew.-%, bezogen auf das Gesamtgewicht der Lösung, liegt.

11. Wässrige Leukoindigo-Lösung, aufweisend ein aromatisches Amin in Form von Anilin oder Anilin und N-Methylanilin, wobei die Konzentration des aromatischen Amins unter 200 ppm liegt, bestimmt nach ISO 14362-1:2017(E), wobei der Leukoindigo in Form eines gemischten Natrium- und Kaliumsalzes vorliegt und wobei das Molverhältnis von Natrium zu Kalium im Bereich von 4:1 bis 8:1 liegt.

12. Wässrige Leukoindigo-Lösung nach Anspruch 11, wobei die Konzentration des Salzes im Bereich von 5 bis 65 Gew.-%, bezogen auf das Gesamtgewicht der Lösung, liegt.

13. Verfahren zur Herstellung von Indigo, aufweisend Schritt (D):
(D) Oxidieren der wässrigen Leukoindigo-Lösung nach irgendeinem der Ansprüche 11 bis 12.

14. Verfahren nach Anspruch 13, aufweisend den Schritt (C) vor dem Schritt (D):
(C) Behandeln eines Textils mit der Leukoindigo-Lösung, wie sie in irgendeinem der Ansprüche 11 bis 12 definiert ist.

## Revendications

1. Procédé de fabrication d'une solution aqueuse de sel de leuco-indigo, le procédé comprenant une étape (A) :
(A) soumission d'une composition aqueuse comprenant de l'indigo qui contient une amine aromatique sous la forme d'aniline ou d'aniline et N-méthylaniline, à une réduction, préférentiellement une hydrogénation, en présence d'hydroxyde de sodium et d'hydroxyde de potassium afin de générer une solution aqueuse de leuco-indigo comprenant ladite amine aromatique, dans lequel ledit leuco-indigo est sous la forme d'un sel mixte de sodium et potassium, dans lequel le rapport molaire entre le sodium et le potassium est compris entre 4 : 1 et 8 : 1.

2. Procédé de purification d'une solution aqueuse de leuco-indigo comprenant une amine aromatique sous la forme d'aniline ou de N-méthylaniline ou d'aniline et N-méthylaniline, dans lequel ledit leuco-indigo est sous la forme d'un sel mixte de sodium et potassium, dans lequel le rapport molaire entre le sodium et le potassium est compris entre 4 : 1 et 8 : 1, le procédé comprenant une étape (B) :
(B) soumission de la solution aqueuse de leuco-indigo comprenant ladite amine aromatique à une étape de purification choisie parmi le groupe constitué de
(a) distillation
(b) distillation par entraînement à la vapeur
(c) extraction
(d) stripage avec un gaz inerte
(e) ou une combinaison de deux ou plus de ceux-ci.

3. Procédé selon la revendication 2, comprenant une étape (A) avant l'étape (B) :
(A) soumission d'une composition aqueuse comprenant de l'indigo qui contient une amine aromatique sous la forme d'aniline ou d'aniline et N-méthylaniline, à une réduction, préférentiellement une hydrogénation, en présence d'hydroxyde de sodium et d'hydroxyde de potassium afin de générer une solution aqueuse de leuco-indigo comprenant ladite amine aromatique, dans lequel ledit leuco-indigo est sous la forme d'un sel mixte de sodium et potassium, dans lequel le rapport molaire entre l'hydroxyde de sodium et l'hydroxyde de potassium est compris entre 4 : 1 et 8 : 1.

4. Procédé selon l'une quelconque des revendications précédentes, dans lequel le rapport molaire entre le sodium et le potassium est compris entre 5 : 1 et 7 : 1.

5. Procédé selon l'une quelconque des revendications précédentes, dans lequel la concentration de ladite amine aromatique dans la solution avant purification est supérieure à 200 ppm telle que déterminée selon la norme ISO 14362-1:2017(E).

6. Procédé selon la revendication 2 ou l'une quelconque des revendications 3 à 5 en combinaison de la revendication 2, dans lequel la distillation mise en œuvre dans l'étape (B) est choisie parmi le groupe constitué de : distillation à pression normale, distillation sous vide et distillation par entraînement à la vapeur, ou une combinaison de deux ou trois de celles-ci.

7. Procédé selon la revendication 2 ou l'une quelconque des revendications 3 à 6 en combinaison de la revendication 2, dans lequel l'étape (B) est réalisée aussi longtemps ou aussi souvent que nécessaire jusqu'à ce que, après purification, la concentration de l'amine aromatique dans la solution est inférieure à 200 ppm telle que déterminée selon la norme ISO 14362-1:2017(E).

8. Procédé selon la revendication 2 ou l'une quelconque des revendications 3 à 7 en combinaison de la revendication 2, dans lequel la concentration du sel de leuco-indigo dans la solution après purification est définie dans un intervalle compris entre 5 et 65 % en poids, sur la base du poids total de la solution.

9. Solution aqueuse de sel de leuco-indigo comprenant une amine aromatique sous la forme d'aniline ou d'aniline et N-méthylaniline, dans laquelle la concentration de l'amine aromatique est supérieure à 200 ppm telle que déterminée selon la norme ISO 14362-1:2017(E), dans laquelle le leuco-indigo est sous la forme d'un sel mixte de sodium et potassium, et dans laquelle le rapport molaire entre le sodium et le potassium est compris entre 4 : 1 et 8 : 1.

10. Solution aqueuse de sel de leuco-indigo selon la revendication 9, dans laquelle la concentration du sel dans la solution est comprise entre 5 et 65 % en poids, sur la base du poids total de la solution.

11. Solution aqueuse de leuco-indigo comprenant une amine aromatique sous la forme d'aniline ou d'aniline et N-méthylaniline, dans laquelle la concentration de l'amine aromatique est inférieure à 200 ppm telle que déterminée selon la norme ISO 14362-1:2017(E), dans laquelle ledit leuco-indigo est sous la forme d'un sel mixte de sodium et potassium, et dans laquelle le rapport molaire entre le sodium et le potassium est compris entre 4 : 1 et 8 : 1.

12. Solution aqueuse de leuco-indigo selon la revendication 11, dans laquelle la concentration du sel est comprise entre 5 et 65 % en poids, sur la base du poids total de la solution.

13. Procédé de fabrication de l'indigo comprenant une étape (D) :
(D) oxydation de la solution aqueuse de leuco-indigo telle que définie dans l'une quelconque des revendications 11 à 12.

14. Procédé selon la revendication 13, comprenant une étape (C) avant l'étape (D) :
(C) traitement d'un textile avec la solution de leuco-indigo telle que définie dans l'une quelconque des revendications 11 à 12.
